# DEMANDE DE BREVET EUROPEEN

(11) **EP 1 130 755 A1**
(43) Date de publication de la demande: **05.09.2001**
(21) Numéro de dépôt: 01400381.8
(22) Date de dépôt: 13.02.2001
(51) Int. Cl.: H02N 2/02, H01L 41/09

(54) **Actionneur à déplacement linéaire perfectionné**

(30) Priorité: 25.02.2000 FR 0002416
(71) Demandeur: Meritor Light Vehicle Systems-France, 45600 Sully sur Loire (FR)
(72) Inventeur: Dobson, Simon Blair, Folkestone, Kent CT20 3TA (GB)
(74) Mandataire: Habasque, Etienne Joel Jean-François

(57) **Abrégé**

Actionneur à déplacement linéaire, caractérisé en ce qu'il comporte une pièce mâle (1) et une pièce femelle (5) dans laquelle est engagée la pièce mâle (1), l'une des pièces mâle et femelle (1,5) comportant un filetage (9) et l'autre pièce comprenant au moins une nervure périphérique (7) coopérant avec ledit filetage (9), le diamètre intérieur de la pièce femelle (5) augmenté de la profondeur du filetage (9) étant supérieur au diamètre extérieur de la pièce mâle (1), la pièce femelle (5) portant des actionneurs linéaires (4) disposés à angle droit dans un support libre en déplacement axial par rapport à la pièce mâle et mettant la pièce femelle (5) en vibration sinusoïdale dans deux directions perpendiculaires avec un déphasage approprié entre les vibrations et assurant le déplacement en rotation de la ligne de contact (10) entre ledit filetage (9) et ladite au moins une nervure périphérique (7) alors que le filetage et la nervure périphérique restent immobiles en rotation l'un par rapport à l'autre, et par conséquent, le déplacement linéaire relatif de la pièce femelle (5) et de la pièce mâle (1).

## Description

La présente invention est relative aux actionneurs et se rapporte plus particulièrement aux actionneurs à déplacement linéaire.

Les moteurs et actionneurs pour régulateurs de fenêtres et autres composants pour véhicules automobiles nécessitent de nombreux composants tournants comprenant des engrenages à réduction pour assurer un déplacement essentiellement ou partiellement linéaire d'un autre composant tel qu'une vitre latérale, un toit ouvrant, un composant de verrouillage, une source de lumière, une porte ou autre organe de fermeture.

De tels dispositifs nécessitent un grand nombre de pièces, sont encombrants, coûteux et nécessitent une énergie relativement importante du fait de nombreux frottements entre les différentes pièces.

L'invention vise à remédier aux inconvénients des actionneurs connus en créant un actionneur à déplacement linéaire qui nécessite l'utilisation d'un minimum de pièces.

Elle a donc pour objet un actionneur à déplacement linéaire, caractérisé en ce qu'il comporte une pièce mâle et une pièce femelle dans laquelle est engagée la pièce mâle, l'une des pièces mâle et femelle comportant un filetage et l'autre pièce comprenant au moins une nervure périphérique coopérant avec ledit filetage, le diamètre intérieur de la pièce femelle augmenté de la profondeur du filetage étant supérieur au diamètre extérieur de la pièce mâle, la pièce femelle portant des actionneurs linéaires disposés à angle droit dans un support libre en déplacement axial par rapport à la pièce mâle et mettant la pièce femelle en vibration sinusoïdale dans deux directions perpendiculaires avec un déphasage approprié entre les vibrations et assurant le déplacement en rotation de la ligne de contact entre ledit filetage et ladite au moins une nervure périphérique alors que le filetage et la nervure périphérique restent immobiles en rotation l'un par rapport à l'autre, et par conséquent, le déplacement linéaire relatif de la pièce femelle et de la pièce mâle.

Suivant d'autres caractéristiques de l'invention :
- la pièce mâle est une arbre comportant un filetage extérieur et la pièce femelle comprend des nervures et des gorges circulaires intérieure ;
- la pièce mâle est un arbre comportant un filetage extérieur et la pièce femelle est un écrou comprenant un taraudage intérieur de même pas que celui du filetage extérieur de l'arbre mais de pente de filet différente ;
- la pièce femelle est disposée dans un support en forme de cage libre en déplaçable axial sur l'arbre, entre les actionneurs linéaires et des ressorts de rappel correspondants, chaque ressort de rappel étant diamétralement opposé à un actionneur linéaire ;
- les actionneurs linéaires sont des actionneurs piézo-électriques ou magnétostrictifs ou bien des éléments électromagnétiques alimentés à partir d'une source d'énergie appropriée.

L'invention sera mieux comprise à la lecture de la description qui va suivre, donnée uniquement à titre d'exemple et faite en se référant aux dessins annexés, sur lesquels :
- la Fig.1 est un graphique montrant la courbe de déplacement d'un point selon une circonférence sous l'effet de deux fonctions sinusoïdales dont les angles sont décalés de 90° ;
- la Fig.2 est une coupe suivant la ligne 2-2 de l'actionneur à déplacement linéaire suivant l'invention représenté à la Fig.3 ; et
- la Fig.3 est une vue schématique et en coupe partielle de dessus de l'actionneur à déplacement linéaire suivant l'invention.

Un déplacement linéaire peut être engendré par la rotation d'une ligne de contact, mais pas par les composants réels en contact, autour d'un axe, ledit déplacement étant obtenu par une combinaison de mouvements purement linéaires.

Un actionneur mettant en oeuvre un déplacement du type précité n'utilise par conséquent aucun élément tournant pour créer un mouvement linéaire le long d'un pas de vis et il est caractérisé par un certain nombre d'éléments, par exemple deux, se dilatant et se contractant, agencés autour d'un composant de forme appropriée présentant des caractéristiques analogues à un pas de vis, qui est lui-même associé à un arbre fileté extérieurement et qui est mis en mouvement sur un trajet circulaire autour dudit arbre par une modulation en phase appropriée de la dilatation et de la contraction desdits éléments.

Typiquement, les éléments se dilatant et se contractant comprennent (mais de façon non limitative) des cellules piézo-électriques ou magnétostrictives appropriées ou bien des éléments électromagnétiques-alimentés à partir d'une source d'énergie appropriée.

Il est bien connu qu'une combinaison perpendiculaire de deux ondes sinusoïdales peut créer un mouvement circulaire comme cela a été démontré par Lissajou et d'autres.

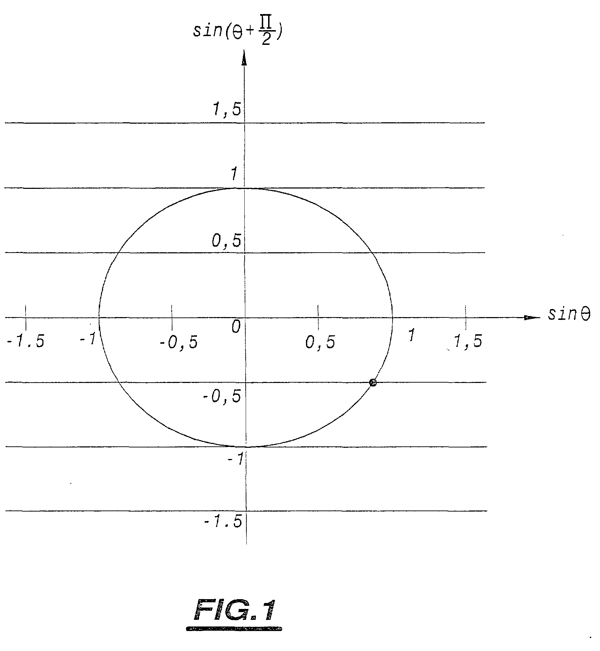

Un exemple de ceci est donné dans le graphe de la figure 1 produit en déterminant le lieu d'un point tel que x=sinθ et y=sin(θ+90°), l'angle θ croissant de O à 360°. On notera que le point ne tourne pas lui-même, mais qu'il se déplace dans un cercle.

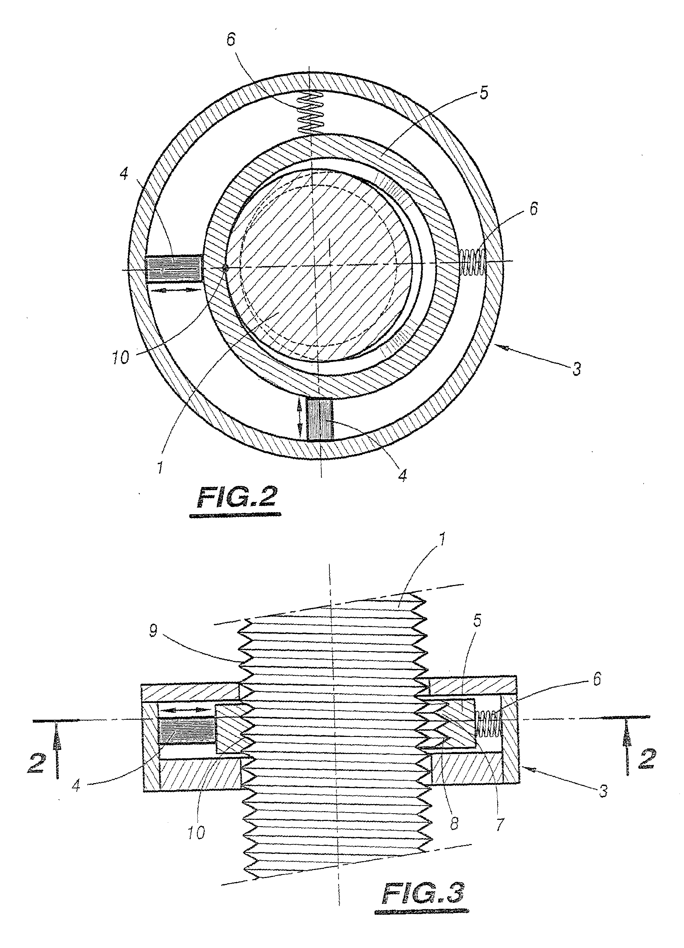

L'actionneur suivant l'invention représenté aux figures 2 et 3 comprend un arbre fileté 1.

Un support 3 en forme de cage axialement libre, monté sur l'arbre comporte des actionneurs linéaires 4 disposés à angle droit par rapport à l'arbre 1 et qui font vibrer un écrou 5 sinusoïdalement dans deux directions perpendiculaires avec un déphasage approprié entre les vibrations comme représenté à la figure 2.

L'écrou 5 est disposé dans le support 3 entre les actionneurs linéaires 4 et des ressorts de rappel 6 diamétralement opposés à chacun des actionneurs linéaires.

Ainsi qu'on le voit à la figure 3, l'écrou 5 a un diamètre intérieur supérieur au diamètre extérieur de l'arbre fileté 1.

Il comporte des nervures 7 et des gorges correspondantes 8 voisines circulaires lui conférant une pente nulle.

Il est en contact par ses nervures 7 et ses gorges 8 avec le filetage 9 de l'arbre fileté 1 suivant une ligne de contact 10 du fait de l'application instantanée de l'écrou 5 sur l'arbre 1 sous l'action conjuguée des actionneurs linéaires 4 et des ressorts de rappel 6 correspondants.

La sollicitation par les actionneurs 4 de l'écrou 5 dans deux directions perpendiculaires avec un déphasage approprié provoque la rotation de la ligne de contact 10 autour de l'arbre.

L'écrou 5 lui-même ne tourne pas par rapport à l'arbre 1 alors que la ligne de contact 10 le fait comme le point dans l'exemple précité en référence à la figure 1.

L'inversion de la différence de phase entre les deux actionneurs inverse la direction de déplacement de l'écrou 5 par rapport à l'arbre 1.

Il est fondamental pour le principe d'un tel actionneur que pour chaque rotation de la ligne de contact 10, l'écrou 5 avance en raison de la différence de pente des deux formes de filet.

En outre, le pas des deux formes de filet doit être égal si on souhaite l'engagement de plus d'un filet.

De façon avantageuse, et comme décrit plus haut, l'écrou 5 a une pente de filet nulle et l'arbre 1 a une pente égale au pas choisi comme on peut le trouver dans un filetage simple.

Des filetages multiples peuvent être utilisés si des coûts de fabrication excédentaires sont justifiés pour l'application souhaitée.

Selon le rapport des diamètres et des pentes, le dispositif ainsi réalisé peut être autoblocant, c'est-à-dire irréversible on non selon les souhaits.

Le diamètre inférieur de l'écrou plus une profondeur d'un filet doit être supérieur au plus grand diamètre de l'arbre.

Les rôles de l'écrou 5 et de l'arbre 1 peuvent être inversés pour permettre au filet de pente nulle d'être formé sur l'arbre si ceci est plus approprié pour la fabrication.

L'actionneur ainsi formé peut être utilisé pour entraîner des mouvements essentiellement linéaires de diverses natures sans recourir aux boites de vitesses et aux dispositifs de transmission d'énergie complexes.

## Revendications

1. Actionneur à déplacement linéaire, **caractérisé en ce qu**'il comporte une pièce mâle (1) et une pièce femelle (5) dans laquelle est engagée la pièce mâle (1), l'une des pièces mâle et femelle (1,5) comportant un filetage (9) et l'autre pièce comprenant au moins une nervure périphérique (7) coopérant avec ledit filetage (9), le diamètre intérieur de la pièce femelle (5) augmenté de la profondeur du filetage (9) étant supérieur au diamètre extérieur de la pièce mâle (1), la pièce femelle (5) portant des actionneurs linéaires (4) disposés à angle droit dans un support libre en déplacement axial par rapport à la pièce mâle et mettant la pièce femelle (5) en vibration sinusoïdale dans deux directions perpendiculaires avec un déphasage approprié entre les vibrations et assurant le déplacement en rotation de la ligne de contact (10) entre ledit filetage (9) et ladite au moins une nervure périphérique (7) alors que le filetage et la nervure périphérique restent immobiles en rotation l'un par rapport à l'autre, et par conséquent, le déplacement linéaire relatif de la pièce femelle (5) et de la pièce mâle (1).

2. Actionneur suivant la revendication 1, **caractérisé en ce que** la pièce mâle est une arbre (1) comportant un filetage extérieur (9) et la pièce femelle (5) comprend des nervures et des gorges circulaires (7,8) intérieures.

3. Actionneur suivant la revendication 1, **caractérisé en ce que** la pièce mâle est un arbre comportant un filetage extérieur et la pièce femelle est un écrou comprenant un taraudage intérieur de même pas que celui du filetage extérieur de l'arbre mais de pente de filet différente.

4. Actionneur suivant la revendication 2, **caractérisé en ce que** la pièce femelle (5) est disposée dans un support (3) en forme de cage libre en déplaçable axial sur l'arbre (1), entre les actionneurs linéaires (4) et des ressorts de rappel (6) correspondants, chaque ressort de rappel étant diamétralement opposé à un actionneur linéaire (4).

5. Actionneur suivant l'une des revendications 1 à 4, **caractérisé en ce que** les actionneurs linéaires (4) sont des actionneurs piézo-électriques ou magnétostructifs ou bien des éléments électromagnétiques alimentés à partir d'une source d'énergie appropriée.
